# EUROPEAN PATENT APPLICATION

(11) **EP 3 734 391 A1**
(43) Date of publication of application: **04.11.2020**
(21) Application number: 19305570.4
(22) Date of filing: 03.05.2019
(51) Int. Cl.: G05D 1/02, G06K 9/00

(54) **SIMULTANEOUS LOCALIZATION AND MAPPING**

(71) Applicant: Terabee S.A.S., 01630 Saint-Genis Pouilly (FR)
(72) Inventor: RUFFO, Massimiliano, 1224 Chêne-Bougerie (CH); ZURAD, Krzysztof, 01630 St. Genis-Pouilly (FR); KOVERMANN, Jan W., 01630 St. Genis-Pouilly (FR)
(74) Representative: Weihs, Bruno Konrad

(57) **Abstract**

A method for simultaneous localization of a movable robot and mapping by the robot of an object in a zone. The method comprises providing the robot with at least a distance measurement sensor, whereby the robot is enabled to detect the object by means of the at least one distance measurement sensor; execute a wall following algorithm enabling to lead the robot around the object based on a plurality of measurements made with the at least one distance measurement sensor, along a first circumnavigated path obtained by the wall following algorithm, hence causing the robot to travel between a plurality of successive positions around the object; collect the plurality of measurements from the at least one distance measurement sensor while the robot is at the respective successive positions on the first circumnavigated path; aggregate the plurality of measurements taken respectively at the plurality of successive positions into an initial local snapshot of the zone, thereby obtaining a scanned shape of the object after each first circumnavigation; constructing a determined path from the first circumnavigated path, whereby the determined path is intended to lead to robot around the object on subsequent circumnavigations; lead the robot on the determined path on subsequent circumnavigations; position the robot at further determined positions on the determined path during the subsequent circumnavigations; collect further measurement from the at least one distance measurement sensor while the robot is at the further determined positions: aggregate the further measurements into further local snapshots of the zone for each of the subsequent circumnavigations; and perform a scanmatch algorithm for each of the further local snapshots with the initial local snapshot to determine what is the real position of the robot with respect to the object.

## Description

### Technical field

The invention is in the field of Simultaneous Localization and Mapping (SLAM), in robotic mapping and navigation.

### Background

In the prior art Simultaneous Localization and Mapping (SLAM) approach, features in the world are found by making use of cameras or laser scanners. Features in the world may for example comprise corners, walls, windows, a 2-dimensional slice of the world generated by laser scanner. SLAM is typically a technique to find a position of a robot in a map, by means of continuous mapping of the environment updating the map and the robot's localization within the map. There has been a significant amount of research on the SLAM problem. Most popular approaches are Rao-Blackwellized particle filter SLAM [4] or Hector SLAM [5].

The Hector SLAM approach "combines a 2D SLAM system based on the integration of laser scans (LIDAR) in a planar map and an integrated 3D navigation system based on an inertial measurement unit (IMU)." [5]

A traditional laser scanner is a device containing rotating parts. For example, the traditional laser scanner may comprise one Time of Flight (ToF) laser sensor rotating around itself and aggregating measurements data.

Scan matching is a well-known technique for recovery of relative position and orientation of for example two laser scans or point clouds. There are many different variants of scan matching algorithm among which the iterative closest point (ICP) is the most popular. The algorithm iteratively revises the transformation (combination of translation and rotation) needed to minimize an error metric, usually a distance from the source to the reference point cloud, such as the sum of squared differences between the coordinates of the matched pairs. ICP is one of the widely used algorithms in aligning three dimensional models [3].

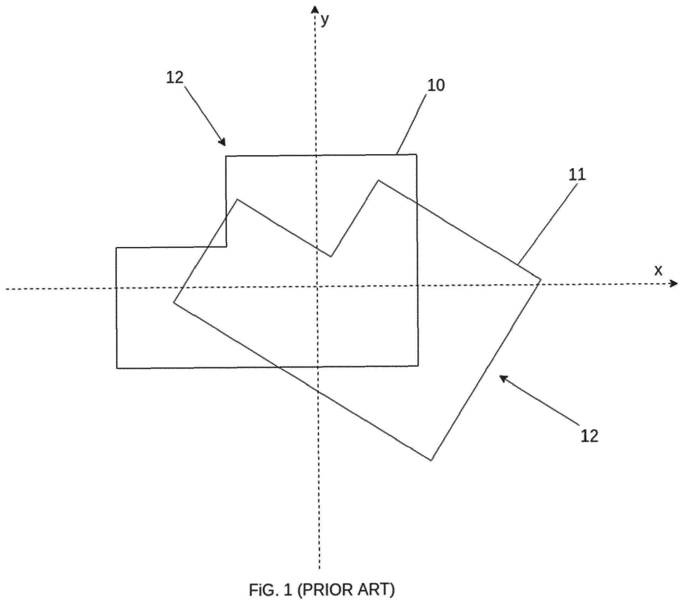

Referring to Figure 1, it contains an example of a scan of a surrounding environment 12 identified by a robot (the robot is not represented in Figure 1). The surrounding environment 12 is shown as delineated by an outline represented in a 2-dimensional space with a x-y-reference system. The surrounding environment 12 is represented in two different views 10 and 11, which are the results of 2 consecutive scans. The difference between both views is that the view 11 was consecutively scanned by the robot after it had rotated by number of degrees from a position where it had scanned the view 10.

Prior art reference [2] discloses Simultaneous Localization and Mapping (SLAM) with sparse sensing. This document addresses the problem for robots with very sparse sensing that provides insufficient data to extract features of the environment from a single scan. The SLAM is modified to group several scans taken as the robot moves into multi-scans, and this way achieving higher data density in exchange for greater measurement uncertainty due to odometry error. In this sense, prior art reference [2] in conjunction with a particle filter implementation, yields a reasonably efficient SLAM algorithm for robots with sparse settings.

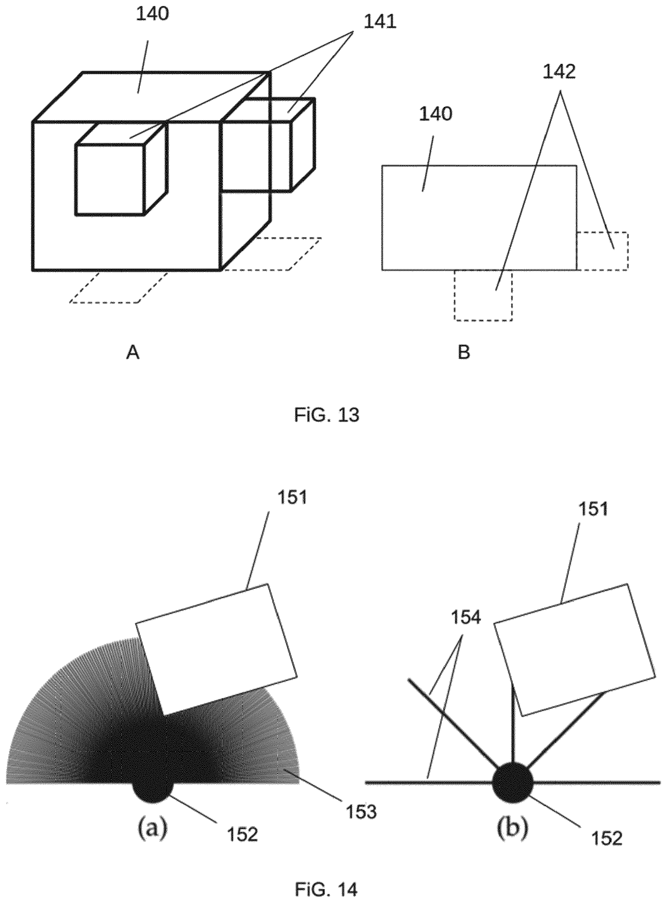

Figure 14A shows typical density of scan taken by laser scanner. A single scan of an object 151 collected by robot 152 with laser scanner has significantly higher spatial sampling density 153 on the scanned object 151. In contrast, Figure 14B shows the data density of a scan using only five radially-spaced range sensors beams 154, such density of scan could be considered a sparse. Typically, sparse sensing refers to low spatial sampling density of scan. [2]

One of the problems that the present invention aims to address is the realization of an alternative solution to the prior art technology.

### Summary of invention

The invention provides a method for simultaneous localization of a movable robot and mapping by the robot of an object in a zone. The method comprises providing the robot with at least a distance measurement sensor, whereby the robot is enabled to detect the object by means of the at least one distance measurement sensor; execute a wall following algorithm enabling to lead the robot around the object based on a plurality of measurements made with the at least one distance measurement sensor, along a first circumnavigated path obtained by the wall following algorithm, hence causing the robot to travel between a plurality of successive positions around the object; collect the plurality of measurements from the at least one distance measurement sensor while the robot is at the respective successive positions on the first circumnavigated path; aggregate the plurality of measurements taken respectively at the plurality of successive positions into an initial local snapshot of the zone, thereby obtaining a scanned shape of the object after each first circumnavigation; constructing a determined path from the first circumnavigated path, whereby the determined path is intended to lead the robot around the object on subsequent circumnavigations; lead the robot on the determined path on subsequent circumnavigations; position the robot at further determined positions on the determined path during the subsequent circumnavigations; collect further measurement from the at least one distance measurement sensor while the robot is at the further determined positions: aggregate the further measurements into further local snapshots of the zone for each of the subsequent circumnavigations; and perform a scanmatch algorithm for each of the further local snapshots with the initial local snapshot to determine what is the real position of the robot with respect to the object.

In a preferred embodiment, the step of constructing the determined path after the first circumnavigated path involves fitting to the scanned shape of the object either one of an ellipse-shape, or a set of straight lines and arcs.

In a further preferred embodiment, the method further comprises a correction of an odometry error according to the determined real position of the robot with respect to the object, and a control of a robot's position corresponding to the corrected odometry error.

In a further preferred embodiment, the method further comprises providing the robot with a further distance measurement sensor, wherein the further distance measurement sensor and the at least one distance measurement sensor are any one of the following: a single point sensor, a multi-pixel sensor, and a single point "small" Field of View (FoV) Time of Flight (ToF) sensor, or distinct pixels from a multi-pixel camera, and are positioned on the robot such that the respective beams that they emit have propagating directions at a slight angle from each other such to cover the height of the object.

In a further preferred embodiment, the at least one distance measurement sensor is a 3D-camera positioned on the robot such that a Field of View of the 3D-camera covers the height of the object.

In a further preferred embodiment, the step of executing the wall following algorithm is based on the plurality of measurements that also include measurements of the height of the object in order to detect overhangs of the object, whereby the wall following algorithm considers a detected overhang as a wall of the object that rises from where the detected overhang is projected vertically on the ground.

### Brief description of the Figures

The invention will now be described using a detailed description of preferred embodiments, and in reference to the drawings, wherein:
Figure 1 illustrates the result of consecutive scans operated with a SLAM system from a robot, according to an example of prior art;
Figure 2 shows a schematic representation of a robot emitting beams with ToF sensors according to an example embodiment of the invention;
Figure 3 is a schematic representation of the same robot as in Figure 2, but taken from a different angle;
Figure 4 contains a result of a snapshot taken with an example system according to the invention;
Figures 5A and 5B contain respectively examples of an object with a determined path drawn around them;
Figure 6 contains a flowchart illustrating how a local snapshot may be obtained according to a preferred embodiment of the invention;
Figures 7A and 7B contain a schematic representation of a sensor setup configuration according to an example embodiment of the invention;
Figure 8 illustrates an example where a robot is shown in two positions on a journey of the robot on the determined path around an object;
Figures 9A, 9B and 9C show schematic representations of a relative distance and an angle from object as measured from the robot, and, required by a wall following algorithm to operate;
Figure 10 illustrates an example how a trajectory around the object can be created;
Figure 11 illustrates a change of a robot's position in an odometry reference frame;
Figure 12 illustrates a dependency of world, odometry, robot and sensor reference frames;
Figures 13A and 13B Illustrate respectively a special case of an object with overhangs. and its 2D outline projection on the ground; and
Figures 14A and 14B Illustrate respectively examples of non-sparse-sensing and sparse-sensing.

### Detailed description of preferred embodiments of the invention

In summary, the invention may be embodied by the methods and systems described below, which involves a robot that carries individual distance measurement sensors between the robot and an object located in proximity of the robot in a zone, and displacement means to position the robot at desired locations. This list of involved features is merely exemplary to implement the invention. Further details are given herein below.

According to the invention, the method may comprise the implementation of following steps:
1. execute a wall following algorithm enabling to lead the robot around an object positioned in the zone, causing the robot to travel between a plurality of successive positions around the object;
2. collect measurement results (points) from the individual sensors while the robot is at the respective determined positions;
3. aggregate the measurement results taken at the successive determined positions of the robot into an initial local snapshot of the zone;
4. generate a determined path from the first local snapshot;
5. lead the robot on the determined path around the object for subsequent moves around the object;
6. position the robot at further determined positions during the subsequent moves;
7. collect measurement results from the individual sensors while the robot is at the further determined positions;
8. aggregate the measurement results taken at the successive further determined positions of the robot into further local snapshots of the zone; and
9. perform a scanmatch algorithm for the further local snapshots with the initial local snapshot to determine what is the real position of the robot with respect to the object.

### Examples of implementations for the inventive method

A major difference between prior art SLAM that uses laser scanner(s) and the SLAM solution(s) of the present invention is that the invention works without the use of a laser scanner, and instead makes use of an array of a plurality of statically mounted ToF sensors. *Statically mounted,* in this context means that the ToF sensors are not moving with respect to a reference frame of the robot. A ToF sensor as used in the present invention is preferably Infrared (IR) based.

While the present example makes use of ToF sensors, these are only examples of possible distance measurement sensors. The example will continue to be described in this configuration, but it is understood that the distance measurement sensors are either one of the following list: a single point sensor, a multi-pixel sensor, a single point "small" Field of View (FoV) Time of Flight (ToF) sensor, a 3D-camera.

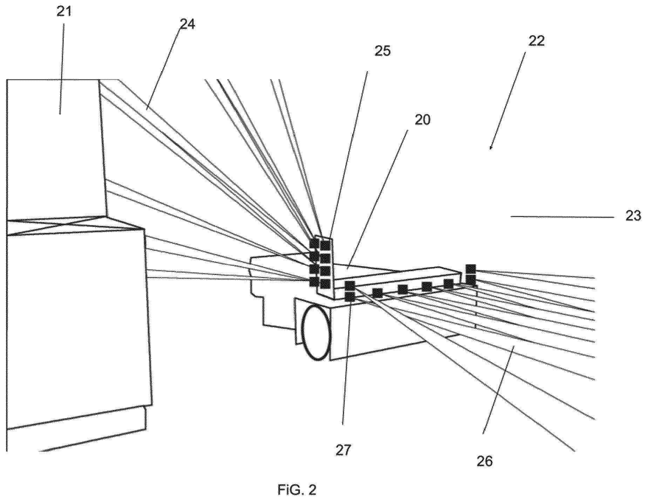

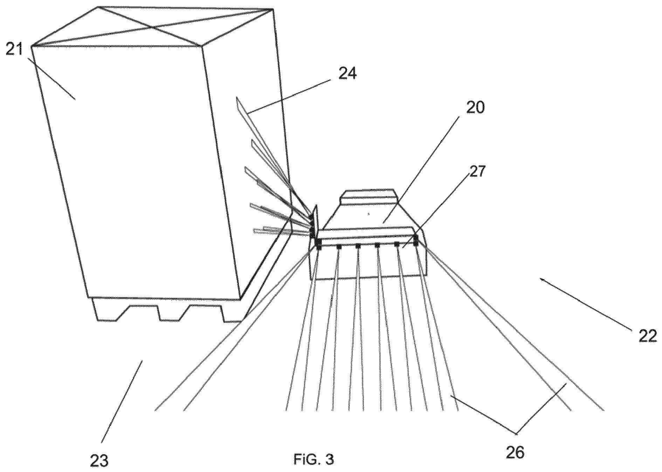

Referring now to the Figures 2 and 3, these each show a robot 20 in a space 22 next to an object 21. The view of the robot 20 is taken from a first angle in Figure 2, and from a second angle different from the first angle, in Figure 3. The robot 20 is configured to produce a 3-dimensional map (not represented in Figures 2 and 3) of the space 22 in which it moves.

In an example situation, the object 21 is a pallet carrying a load which stands out vertically from the floor 23 of the space 22 on which the robot 20 moves. In both of the Figures 2 and 3, it is illustrated by means of first beams 24 how vertical individual sensors 25 are used to scan the object 21: It is further illustrated by means of second beams 26 how horizontal individual sensors 27 mounted on a respective first side and a second side of the robot 20 are used only for anti-collision purposes.

In a preferred embodiment of the present invention, each one of the vertical individual sensors 25 is a ToF sensor that uses light in the near infrared region of the electromagnetic spectrum shaped into a beam with low divergence and emits that infrared-beam (IR-beam) in a direction departing from a horizontal plane - the horizontal plane is substantively parallel to a surface of the floor 23 on which the robot 20 that carries the vertical individual sensors 25 may move. Each one of the horizontal individual sensors 27 is a ToF sensor that emits an IR-beam in a direction substantially parallel to the horizontal plane.

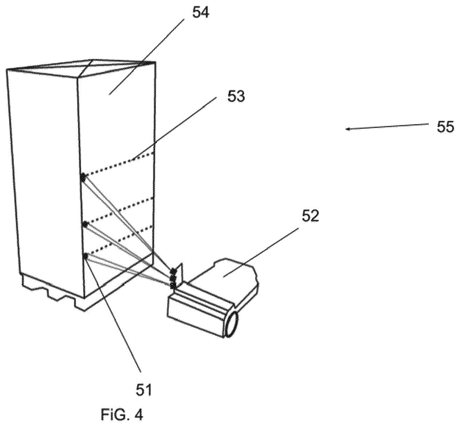

In contrast to prior art SLAM solutions such as: a laser scanner that scans the perimeter at 360° by the effect of a rotating mechanism, the individual sensors used in the present invention *are static devices,* and no full representation of the environment is obtained at any single determined period in time where the robot is positioned substantially at a fixed position during the period in time. So instead of the result of Figure 1, we have the result illustrated in Figure 4 where a robot 52 measures a distance to an object 54 and represents it as single point 51 in respect to space 55.

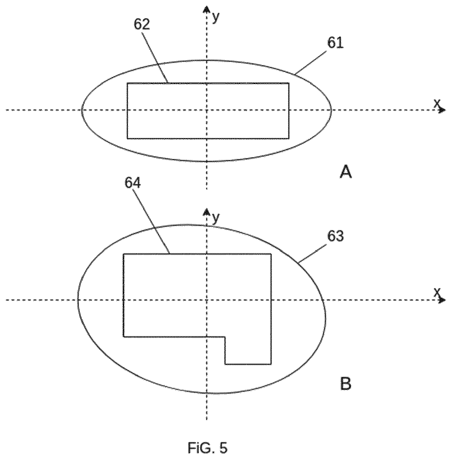

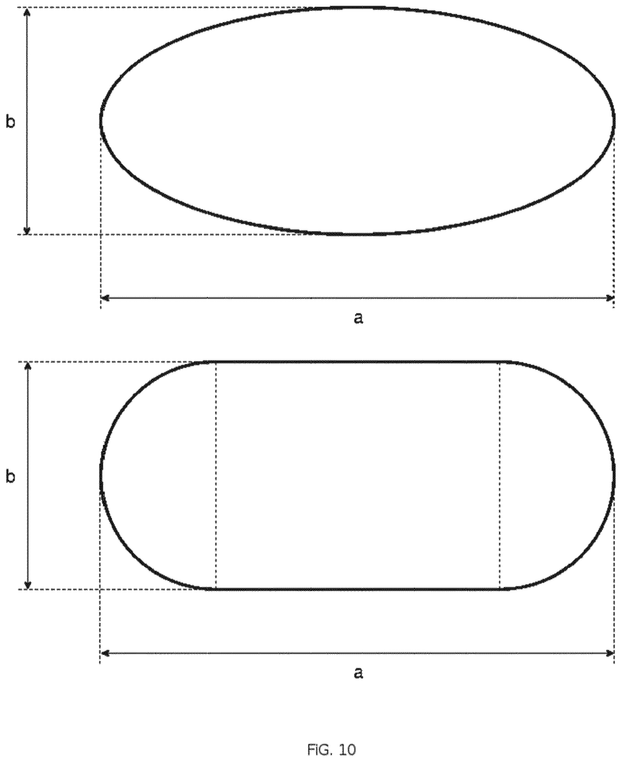

According to the invention, the robot that carries the individual sensors is programmed to move around the object to entirely circumnavigate the object. This is illustrated by 2 examples of Figures 5A and 5B, in which, respectively, the robot (not shown in these Figures) moves around an object 62 and 64 on a determined path 61 and 63 from a second circumnavigation on, after having effected a first circumnavigation of the object 62, respectively 64 -- the first circumnavigation was according to a wall following algorithm. Each determined path 61 and 63 is preferably created by usage of ellipse fitting algorithms. An ellipse is fitted after the object has been scanned during the first circumnavigation with the wall following algorithm, by scaling the ellipse, thereby introducing a small safety distance to avoid overlap between a contour of the object and contour of the robot at any position on the path. Different shapes of path might be used, e.g., ellipse or super-ellipse. Figure 10 shows one example of such an ellipse, and a rounded-rectangle (arcs and straight lines) shaped path.

A special case of an object with overhangs is also taken into consideration. An overhang can be defined as a part of an object that extends above and beyond the lower part of the same object. Figure 13A depicts such a situation when overhangs 141 of an object 140 are vertically projected on the ground. Effectively a 2D-outline of the object 140 and its overhangs 142 as projected in the 2D-outline is depicted on Figure 13B.

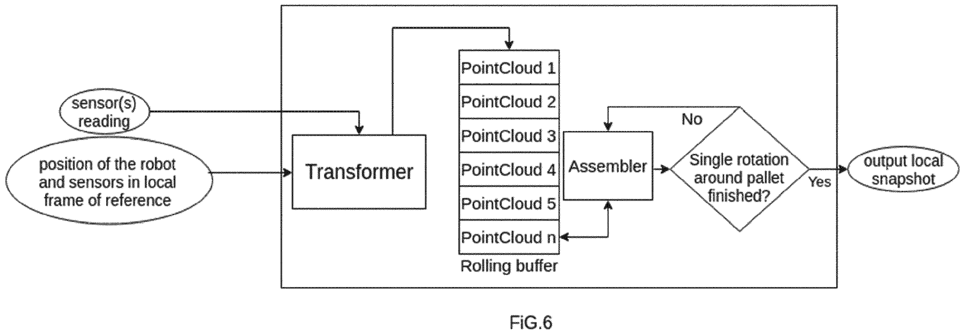

Since the robot moves around the object, measurement results (points) taken by individual sensors are aggregated and a local snapshot of the world, including the object is created. This is illustrated in Figure 6, where a flowchart explicates the process by which a local snapshot may be obtained according to an example embodiment of the invention.

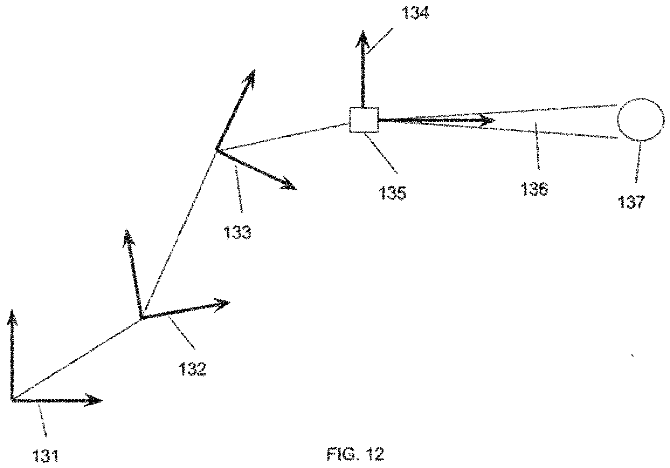

Referring now to figure 12 that describes reference frame dependency, each individual sensor 135 has its own defined position with respect to a center position of the robot in a robot reference frame 133. Having a robot's position relative to an odometry reference frame 132, and sensor's position relative to the robot reference frame 133, in a step of transforming (box labeled "transformer" in Figure 6) a transformer takes a measurement 136 of an object 137 collected by every sensor (example of only one sensor shown in figure 12) and transforms it to the odometry reference frame 132, effectively placing a point (single measurement 136 collected in the sensor reference frame 134) into the odometry reference frame 132. In a step of assembling (box labeled "assembler" in Figure 6) an assembler makes use of a rolling buffer that combines all points into a single point cloud. A point cloud is a collection of single points in the odometry reference frame 132. Hence Figure 6 shows a plurality of collections of single points in the world reference frame, in boxes labeled as point cloud 1 to point cloud n.

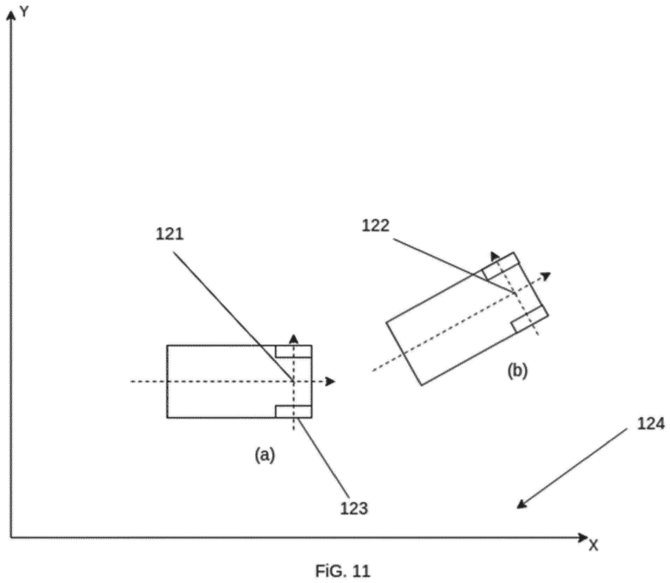

A center position of the robot in a local reference frame (odometry frame) is known thanks to odometry, e.g., encoders calculate a number of rotations of the wheels of the robot as it moves (not shown in Figure 6). Referring to Figure 11, a robot center 121 at position (a) rotates its wheels 123 by some degree and finishes at position (b) in odometry reference frame 124.

Thus, each individual sensor's measurement result is translated as a point in the local reference odometry frame creating the local snapshot. This is universally known as "mapping with known poses".

In order to aggregate the points taken by individual sensors, it is necessary to know where the robot is located at the respective moment when the points are taken by the individual sensors. In this manner, the location of the robot (position) and the individual sensors' measurements enable to determine a new point on the 3D map of the space being produced.

In order to determine the location of the robot, the invention may make use of different known technologies. In a preferred example, the invention makes use of odometry. Odometry is basically a calculation of a new position based on the old (previous) position. For example, by calculating the number of rotations of the wheel that moves the robot, it is possible to detect a small change in position.

Table 1 summarizes the main differences between prior art SLAM and SLAM as achieved in the present invention.

**Table 1**

| **Prior art SLAM** | | **SLAM according to the invention** | |
|---|---|---|---|
| 1. | According to HectorSLAM approach | | According to invention |
| • | A laser based rotational laser scanner that scans distances sequentially in a fixed plane is mounted on the robot. The device output is pairs of distances and angles that can be assembled to a scan of the local environment. | | |
| • | Estimate platform attitude using an IMU (Inertial measurement unit) sensor. | • | The robot moves around the object. By estimating the position of the robot using odometry, individual ToF distance sensor measurements are aggregated to create a point cloud representation of the object. |
| • | Convert scan into point cloud of scan endpoints. | | |
| • | Scan match consecutive point clouds with each other or with existing map. | • | Scan match consecutive point clouds collected at each rotation around the object with the reference scan (map). |
| • | Calculate new position estimation based on the matched point clouds. | • | Calculate new position estimation based on the matched point clouds. |
| 2. | According to sparse sensing approach | | |
| • | No laser scanner on the robot, instead use of statically fixed ToF sensors. SLAM with sparse sensing. The sparse sensing provides too little data to extract features of the environment from a single scan. The SLAM is modified to group several scans taken as the robot moves into multi-scans, and this way achieving higher data density in exchange for greater measurement uncertainty due to odometry error. | | |

### How the robot moves around the object

The Robot moves around the object in either one of two possible cases, as is explained hereunder.
In case 1, the robot makes its first movement around the object to circumnavigate it. The robot doesn't know the shape of the object before it starts the first movement, and a wall following algorithm is executed to complete the first circumnavigation.
In case 2, the robot makes subsequent (after the first circumnavigation of case 1) circumnavigations around the object along a determined path generated after the first circumnavigation travelled during case 1. Indeed, the object has been scanned at least once already before case 2, because the robot executed case 1 already.

### Case 1 - First circumnavigation / move around the object

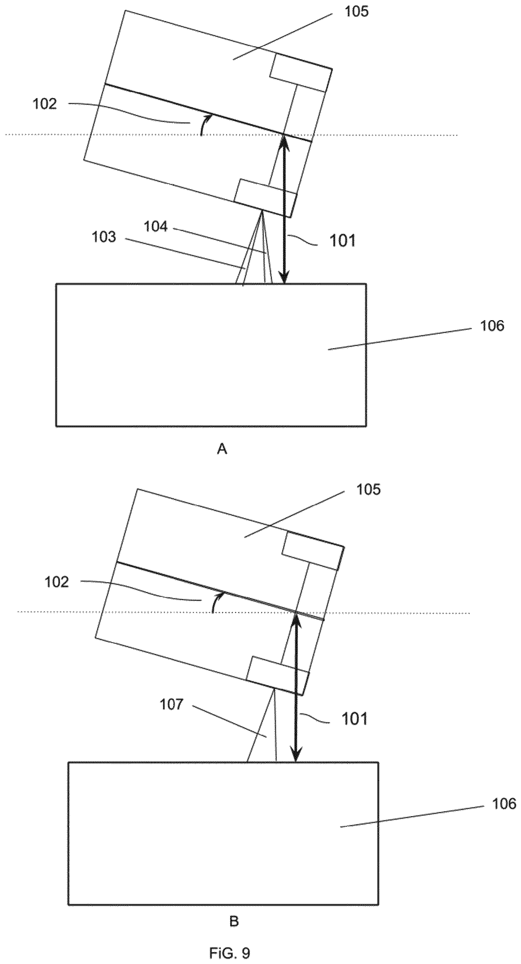

The robot uses the "wall following" algorithm to produce a first object/pallet scan. The manner in which the "wall following" algorithm is used is well known in the art, such as for example in reference [1], and will not be explained in full detail in the present document for this reason. With the wall following algorithm, the robot creates a segment representation of the "wall", which corresponds to a periphery side of the object, and tries to stay parallel at a constant distance away from the object. We refer now to figures 9A and 9B, which show a schematic representation of a relative distance 101 and an angle 102 of a robot 105 from an object 106, as required by the wall following algorithm to operate. When single pixel sensors are utilized, e.g., 2 single pixel sensors as represented on figure 9A, sensor measurements 103 and 104 enable thanks to simple trigonometric equations, to obtain the distance 101 from a center of the robot 105 to the object/pallet 106, and the angle 102 to the object/pallet 106. When a multi-pixel distance sensor is used, a single measurement 107 with signals from at least two of the multi-pixels is sufficient to obtain the distance 101 from a center of the robot 105 to the object/pallet 106, and the angle 102 to the object/pallet 106. The wall following algorithm is configured to try to keep the distance 101 constant and the angle 102 zero.

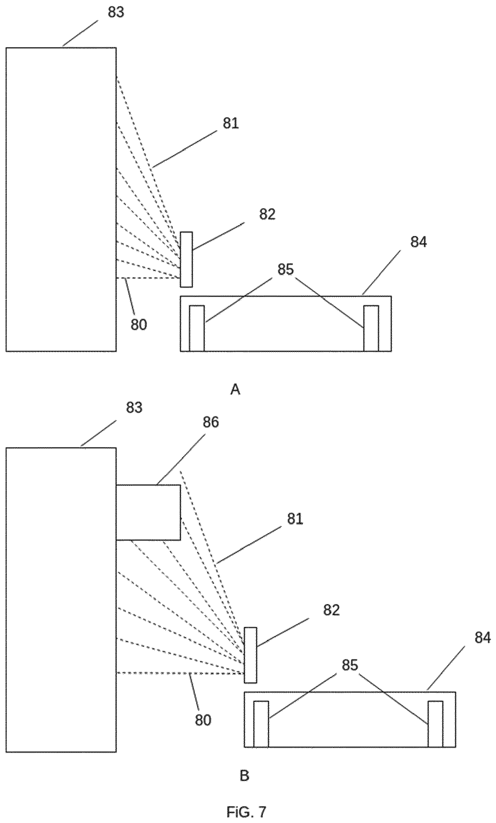

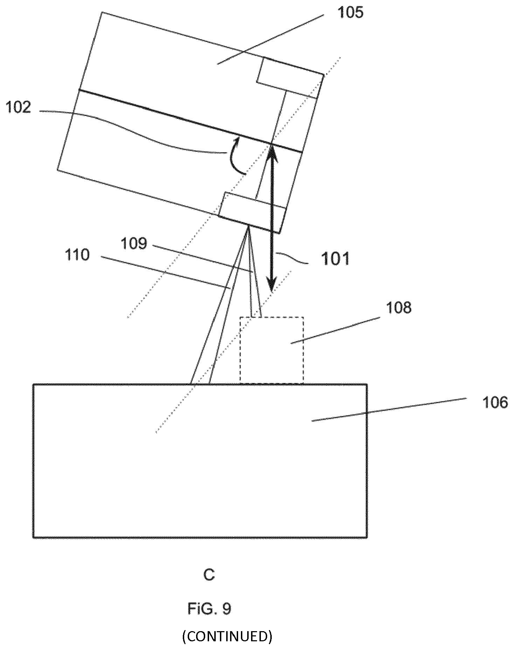

A special case of an object with overhang should be considered. Referring now respectively to figure 9C and figure 7B, when an overhang 108 located somewhere on the object 106 is present, a shortest measurement to the outline of the object 106 should be found. From the set of sensors shown by the spread of sensor beams 80 to 81 represented in dashed lines on figure 7B, first a planar projection of each measurement is performed and then a shortest measurement to an outline of an object 106 is found. When single pixel sensors are utilized, e.g., two single pixel sensors as represented on figure 9C, sensor measurements 110 and 109 are the shortest projected sensor measurements from the set of sensors, therefore used as input information to "wall following" algorithm.

Figures 7A and B contains schematic representations in a front view, of a sensor setup configuration according to an example embodiment of the invention. Each individual sensor (not represented in Figure 7A and 7B) is positioned such that the beam it emits has a propagating direction at a slight angle from the neighboring beam of the neighboring sensor to cover the whole height of the pallet including potential overhangs. This is shown by the spread of sensor beams 80 to 81 represented in dashed lines that propagates from a sensor holder 82 to an object 83. Figure 7B depicts a special case, where an object comprises an overhang 86. Such overhang is also detected by sensor beams 80 to 81. The sensor holder 82 is rigidly attached to a robot base 84. The sensor holder 82 and the robot base 84 are part of a robot not illustrated in Figure 7. The robot further comprises wheels 85 that are configured to move the robot.

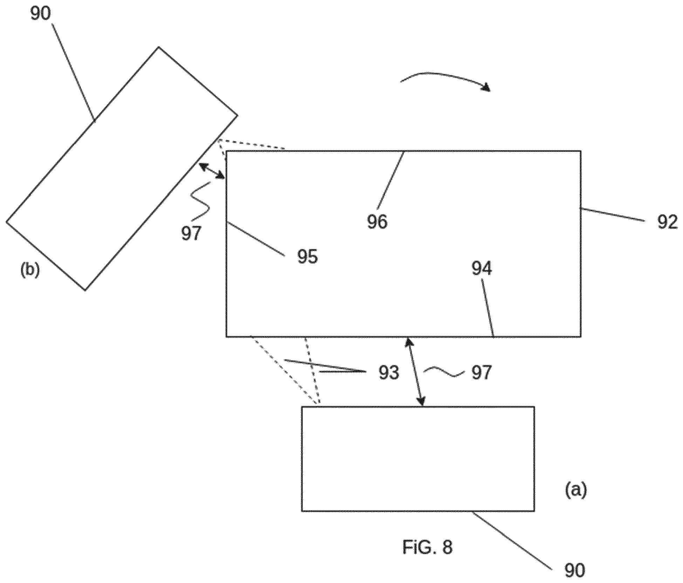

Figure 8 illustrates an example where a robot 90 is shown in two positions (a) and (b) on a journey of the robot 90 around an object 92. To perform the first journey / circumnavigation around the object 92, the robot 90 uses the wall following algorithm. two sensors (not shown in Figure 8) mounted on the robot 90, emit radiation at a relatively small angle from each other, looking towards the object 92, as illustrated by the two dashed lines 93 that extend from the robot 90 to the object 92. As a result, the method and system according to the invention create a segment (not shown in Figure 8) that represents a fragment of the wall, as for example the fragment 94 oriented toward the robot 90 in position (a). As the robot 90 proceeds to position (b), the wall following algorithm creates segments (not illustrated in Figure 8) corresponding to fragments 95 and 96 of the object's 92 wall. The wall following algorithm controls the speed of the robot's wheels in such a way that a distance 97 between the robot 90 and the object 92 stays substantially constant. See Figure 9, distance 101 for an example of definition of the distance, where it is defined by the distance between the center of the robot and the closest point on the pallet segment.

### Case 2 - Subsequent circumnavigations / moves around the object

Once the first object scan is available after the first circumnavigation around the object, a determined path around the scanned object, to be followed by the robot in its subsequent moves around the object, is constructed.

The determined path is constructed either by fitting an ellipse-shape to the scanned object (see Figure 5 and corresponding description thereof herein above), or a set of straight lines and arcs. Indeed, other shapes apart from ellipse may be generated, e.g., based on the width and height of a fitted ellipse, shape of two semi-circles connected with straight lines can be created, as in the figure 10. The size of the ellipse-shape may be parametrized.

Having a local snapshot for every circumnavigation of the robot around the object, i.e., a scanned shape after each circumnavigation, and comparing the local snapshot to the initial local snapshot of the object shape gives us a relative location of the robot with respect to the object.

The robot could theoretically follow the constructed determined path indefinitely using only odometry (encoders calculating for example the number of robot-wheel rotations), however in a real scenario the robot may experience a drift whereby the number of rotations of the encoder for the wheel does not exactly represent the robot's displacement due to friction with the floor and other effects - e.g., wheels may spin in place and therefore the robot doesn't move, although odometry detected movement.

Since the drift may accumulate over time as explained herein above, or due to the fact that odometry relies on a new position calculated based on the previous position, so if there is an error in the measurement of the new position which also comprises that small drift error, it is possible to prevent drift accumulation by scan-matching two local snapshots of the object (for example the initial one and a current one) and find what is the relative difference between them. This relative difference represents the drift of the robot due to odometry, and may be used to correct the calculated position of the robot.

### References

[1] Wall follower autonomous robot development applying fuzzy incremental controller, Dirman Hanafi et al., Intelligent control and automation, 2013, 4, 18-25;
[2] SLAM with sparse sensing, Kristopher R. Beevers, Wesley H. Huang, to appear in the 2006 IEEE International conference on Robotics & Automation (ICRA 2006).
[3] Efficient Variants of the ICP Algorithm, Rusinkiewicz, Szymon, Marc Levoy (2001). Proceedings Third International Conference on 3-D Digital Imaging and Modeling. Quebec City, Quebec, Canada. pp. 145-152
[4] Grisetti, Giorgio, Cyrill Stachniss, and Wolfram Burgard. "Improved techniques for grid mapping with rao-blackwellized particle filters." IEEE transactions on Robotics 23.1 (2007): 34.
[5] Kohlbrecher, Stefan, et al. "A flexible and scalable slam system with full 3d motion estimation." 2011 IEEE International Symposium on Safety, Security, and Rescue Robotics. IEEE, 2011.

## Claims

1. A method for simultaneous localization of a movable robot and mapping by the robot of an object in a zone, comprising
providing the robot with at least a distance measurement sensor, whereby the robot is enabled to detect the object by means of the at least one distance measurement sensor;
execute a wall following algorithm enabling to lead the robot around the object based on a plurality of measurements made with the at least one distance measurement sensor, along a first circumnavigated path obtained by the wall following algorithm, hence causing the robot to travel between a plurality of successive positions around the object;
collect the plurality of measurements from the at least one distance measurement sensor while the robot is at the respective successive positions on the first circumnavigated path;
aggregate the plurality of measurements taken respectively at the plurality of successive positions into an initial local snapshot of the zone, thereby obtaining a scanned shape of the object after each first circumnavigation;
constructing a determined path from the first circumnavigated path, whereby the determined path is intended to lead the robot around the object on subsequent circumnavigations;
lead the robot on the determined path on subsequent circumnavigations;
position the robot at further determined positions on the determined path during the subsequent circumnavigations;
collect further measurement from the at least one distance measurement sensor while the robot is at the further determined positions:
aggregate the further measurements into further local snapshots of the zone for each of the subsequent circumnavigations;
perform a scanmatch algorithm for each of the further local snapshots with the initial local snapshot to determine what is the real position of the robot with respect to the object.

2. The method of claim 1, wherein the step of constructing the determined path after the first circumnavigated path involves fitting to the scanned shape of the object either one of
an ellipse-shape, or
a set of straight lines and arcs.

3. The method of claim 1, further comprising a correction of an odometry error according to the determined real position of the robot with respect to the object, and a control of a robot's position corresponding to the corrected odometry error.

4. The method of any one of claims 1 to 3, further comprising providing the robot with a further distance measurement sensor, wherein the further distance measurement sensor and the at least one distance measurement sensor are any one of the following: a single point sensor, a multi-pixel sensor, and a single point "small" Field of View (FoV) Time of Flight (ToF) sensor, or distinct pixels from a multi-pixel camera, and are positioned on the robot such that the respective beams that they emit have propagating directions at a slight angle from each other such to cover the height of the object.

5. The method of any one of claims 1 to 3, wherein the at least one distance measurement sensor is a 3D-camera positioned on the robot such that a Field of View of the 3D-camera covers the height of the object.

6. The method of any one of claims 1 to 3, wherein the step of executing the wall following algorithm is based on the plurality of measurements that also include measurements of the height of the object in order to detect overhangs of the object, whereby the wall following algorithm considers a detected overhang as a wall of the object that rises from where the detected overhang is projected vertically on the ground.
